# EUROPEAN PATENT APPLICATION

(11) **EP 2 746 473 A1**
(43) Date of publication of application: **25.06.2014**
(21) Application number: 13005969.4
(22) Date of filing: 20.12.2013
(51) Int. Cl.: E03D 5/02, E03D 5/10

(54) **A pneumatic inductive control device of a pneumatic drain valve**

(30) Priority: 21.12.2012 CN 201210562977
(71) Applicant: Li, Feiyu, Xiamen (CN)
(72) Inventor: Li, Zheng, Xiamen (CN); Chi, Shangfei, Xiamen (CN); Liu, Yuzhi, Xiamen (CN)
(74) Representative: Verscht, Thomas Kurt Albert

(57) **Abstract**

The present invention is provided with a pneumatic inductive control device of a pneumatic drain valve, which comprising an inductor (6), a controller (3), a power driven gas pump (5), gas connecting pipes (51) and at least one electromagnetic valve (4); the output of the inductor is connected to the input of the controller, the outputs of the controller are respectively connected to the input terminal of the electromagnetic valve and the input terminal of the power driven gas pump; the gas outlet of the power driven gas pump is connected to the gas inlet of the electromagnetic valve by gas connecting pipe; the gas inlet of at least one gas chamber (1) of the pneumatic drain valve is connected to the gas outlet of the electromagnetic valve by gas connecting pipe (41). The present invention adds an inductive control mode to the pneumatic drain valve, and the assembly position is not limited, thus satisfying the users' assembly need.

## Description

### Field of the invention

The present invention relates to a control device of a pneumatic drain valve, especially to a pneumatic inductive control device of a pneumatic drain valve.

### Background of the invention

The drainage control methods of a drain valve of existing technology are divided into manual control and inductive control, thereinto, the inductive control methods are divided into inductive-only control and manual-inductive control. Recently, the inductive control method of the drain valve is just applied in mechanical control drain valve, that is to say, the panel controls the motor to drive the drain valve to discharge water when it senses a signal, leading that the manual-inductive control panel of the drain valve of existing technology has to be assembled near the water tank but not far away. With respect to the mechanical control drain valve, although the inductive-only control panel can be assembled far away from the water tank, it can not be added with manual control function.

Recently, in the drain valve of existing technology, the manual control methods are divided into mechanical manual control and pneumatic manual control, the pneumatic manual control method is applied in a pneumatic drain valve. The pneumatic drain valve is applied with pneumatic button to cooperate with the gas chamber to complement single-drainage or double-drainage. The manual control of the pneumatic drain valve is available to assemble the pneumatic button far away from the water tank, but it is lack of inductive control method, thus making it inconvenient for the user to choose the assembly position and to use.

### Summary of the invention

The object of the present invention is to overcome the disadvantages of the existing technology and provide with a pneumatic control device of a pneumatic drain valve, which is disclosed with an inductive control method of a pneumatic drain valve, the present invention can not only be assembled to a place near the water tank or far away from the water tank, it can also provide at least one more choice to assemble for the consumer.

The technical proposal of the present invention is as below:

A pneumatic inductive control device of a pneumatic drain valve comprising an inductor, a controller, a power driven gas pump, gas connecting pipes and at least one electromagnetic valve; the output of the inductor is connected to the input of the controller, the outputs of the controller are respectively connected to the input terminal of the electromagnetic valve and the input terminal of the power driven gas pump; the gas outlet of the power driven gas pump is connected to the gas inlet of the electromagnetic valve by gas connecting pipe; the gas inlet of at least one gas chamber of the pneumatic drain valve is connected to the gas outlet of the electromagnetic valve by gas connecting pipe.

In another preferred embodiment, it further comprising at least one pneumatic button, the gas outlet of the pneumatic button is connected to the gas discharging opening of the electromagnetic valve by gas connecting pipe.

In another preferred embodiment, it comprising one electromagnetic valve; a pneumatic button is further disposed; the pneumatic drain valve has two gas chambers, the gas inlet of one gas chamber is connected to the gas outlet of the electromagnetic valve by gas connecting pipe, the gas inlet of the other gas chamber is connected to the gas outlet of the pneumatic button by gas connecting pipe.

In another preferred embodiment, it comprising two electromagnetic valves, the outputs of the controller are respectively connected to the input terminals of the two electromagnetic valves, the gas outlets of the power driven gas pump are respectively connected to the gas inlets of the two electromagnetic valves by gas connecting pipes; the pneumatic drain valve has two gas chambers, the gas inlets of the two gas chambers are respectively connected to the outlets of the two electromagnetic valves by gas connecting pipes.

In another preferred embodiment, it comprising one electromagnetic valve, the output of the controller is connected to the input terminal of the electromagnetic valve, the gas outlet of the power driven gas pump is connected to the gas inlet of the electromagnetic valve by gas connecting pipe; the pneumatic drain valve has at least one gas chamber, the gas inlet of at least one gas chamber is connected to the gas outlet of the electromagnetic valve by gas connecting pipe.

In another preferred embodiment, it comprising two electromagnetic valves and two pneumatic buttons, the outputs of the controller are respectively connected to the input terminals of the two electromagnetic valves, the gas outlets of the power driven gas pump are respectively connected to the gas inlets of the two electromagnetic valves by gas connecting pipes; the pneumatic drain valve has two gas chambers, the gas inlets of the two gas chambers are respectively connected to the gas outlets of the two electromagnetic valves by gas connecting pipes, the gas outlets of the two pneumatic buttons are respectively connected to the gas discharging openings of the two electromagnetic valves by gas connecting pipes.

In another preferred embodiment, it comprising one electromagnetic valve and one pneumatic button, the output of the controller is connected to the input terminal of the electromagnetic valve, the gas outlet of the power driven gas pump is connected to the gas inlet of the electromagnetic valve by gas connecting pipe; the pneumatic drain valve has at least one gas chamber, the gas inlet of one gas chamber is connected to the gas outlet of the electromagnetic valve by gas connecting pipe, the gas outlet of the pneumatic button is connected to the gas discharging opening of the electromagnetic valve by gas connecting pipe.

In another preferred embodiment, it comprising two electromagnetic valves and one pneumatic button, the outputs of the controller are respectively connected to the input terminals of the two electromagnetic valves, the gas outlets of the power driven gas pump are respectively connected to the gas inlets of the two electromagnetic valves; the pneumatic drain valve has two gas chambers, the gas inlets of the two gas chambers are respectively connected to the gas outlets of the two electromagnetic valves by gas connecting pipes, the gas outlet of the pneumatic button is connected to the gas discharging opening of one of the two electromagnetic valves by gas connecting pipe.

In another preferred embodiment, it comprising two pneumatic buttons and one electromagnetic valve, the output of the controller is connected to the input terminal of the electromagnetic valve, the gas outlet of the power driven gas pump is connected to the gas inlet of the electromagnetic valve by gas connecting pipe; the pneumatic drain valve has two gas chambers, the gas inlet of one gas chamber is connected to the gas outlet of the electromagnetic valve by gas connecting pipe, the gas inlet of the other gas chamber is connected to the gas outlet of one of the pneumatic buttons by gas connecting pipe, the gas outlet of the other pneumatic button is connected to the gas discharging opening of the electromagnetic valve by gas connecting pipe.

In another preferred embodiment, the inductor is assembled in a panel, the panel is disposed with an inductive window to cooperate with the inductor.

In another preferred embodiment, the inductor and the pneumatic button are assembled in the same panel, the panel is disposed with an inductive window to cooperate with the inductor.

Compared to the existing technology, the advantages of the present invention are as below:
1. as with an inductor, an controller, a power driven gas pump, gas connecting pipes and at least an electromagnetic valve, the output of the inductor is connected to the input of the controller, the outputs of the controller are respectively connected to the input terminal of the electromagnetic valve and the input terminal of the power driven gas pump, the gas outlet of the power driven gas pump is connected to the gas inlet of the electromagnetic by gas connecting pipe, the gas inlet of at least one gas chamber of the pneumatic drain valve is connected to the gas outlet of the electromagnetic valve by gas connecting pipe, thus composing a pneumatic inductive control device of a pneumatic drain valve of the present invention, thus making the pneumatic drain valve of existing technology realized single drainage or double drainage by inductive control methods, in one hand, it provides at least one more choice to assemble, in the other hand, it makes it more convenient to use; moreover, the pneumatic inductive control device can be assembled near to the water tank of the drain valve, it can also be assembled to a place far away from the water tank, so that the assembly position is not limited, thus providing convenient for the user.
2. preferred, the present invention can further comprise at least one pneumatic button, with the inductive control method, it can provide several combination of manual control and inductive control, thus providing more choices for the user, thus providing convenient for the user; moreover, the control method combining manual control and inductive control makes it available to assemble in a place near the water tank or far away from the water tank, so that in one hand, it overcomes the disadvantage of the exiting manual-inductive control method that it can only be assembled near the water tank, in the other hand, it overcomes the disadvantage of the existing inductive control method that when the control panel is assembled far away from the water tank, it is unavailable to add the manual control function.

The present invention will be further described with the drawings and the embodiments, but a pneumatic inductive control device of a pneumatic drain valve is not limited to the embodiments.

### Brief description of the drawings

Fig.1 illustrates the principle block diagram of the first embodiment of the present invention.
Fig.2 illustrates the principle block diagram of the second embodiment of the present invention.
Fig.3 illustrates the principle block diagram of the third embodiment of the present invention.
Fig.4 illustrates the principle block diagram of the fourth embodiment of the present invention.
Fig.5 illustrates the principle block diagram of the fifth embodiment of the present invention.

### Detailed description of the embodiments

### The first embodiment:

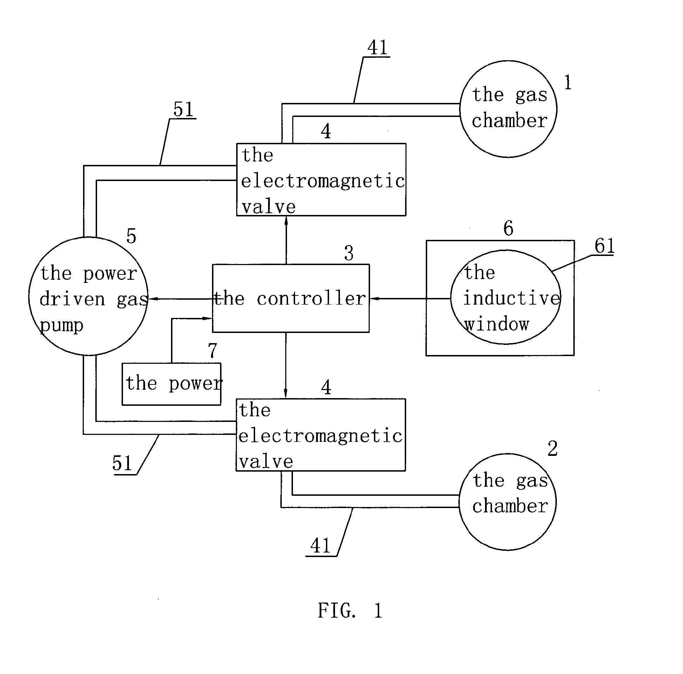

As figured in fig.1, a pneumatic inductive control device of a pneumatic drain valve of the present invention comprising an inductor (not figured out), a controller 3, a power driven gas pump 5, several gas connecting pipe 41 and 51 and two electromagnetic valves 4; the output of the inductive is connected to the input of the controller 3, the outputs of the controller 3 are respectively connected to the input terminals of the two electromagnetic valves 4 and the input terminal of the power driven gas pump 5; the gas outlet of the power driven gas pump 5 is connected to the gas inlets of the two electromagnetic valves 4 by corresponding gas connecting pipes 51. the pneumatic drain valve has two gas chambers 1 and 2, the gas inlets of the gas chambers 1 and 2 are respectively connected to the gas outlets of the two electromagnetic valves 4 by corresponding gas connecting pipes 41.

Preferred, the inductor is assembled to a panel 6, the panel 6 is disposed with an inductive window 61 to cooperate with the inductor.

The two electromagnetic valve 4 are three-way electromagnetic valves, especially to be normally-closed electromagnetic valves of one-inlet and one-outlet, that is to say, each electromagnetic valve 4 has an gas inlet, an gas outlet, and an gas discharging opening, when the electromagnetic valve 4 is powered, the gas inlet is connected to the gas outlet, and the gas discharging opening is closed; when the electromagnetic valve 4 is cut off, the gas inlet is closed, the gas outlet is connected to the gas discharging opening.

The working process of the pneumatic inductive control device of a pneumatic inductive drain valve is as below: the controller 3 is powered by a power 7 (the power 7 can be a DC power supply or a low voltage AC power supply); if someone or someone's hand is near to the inductive window 61, the inductive signal is delivered to the controller 3 by the inductor inside the inductive window 61, so that the controller 3 starts the power driven gas pump 5 and one of the electromagnetic valves 4: when the power driven gas pump 5 starts, it generates gas, the gas runs through the gas connecting pipe 51 of the power driven gas pump 5 and the electromagnetic valve 4, the on electromagnetic valve, the gas connecting pipe 41 of the electromagnetic and the gas chamber, then runs to the corresponding gas chamber, thus controlling the drain valve to discharge water by the gas chamber; when the preset time (for example 3, 4 or 5 seconds) is up, the controller 3 automatically cuts off the power driven gas pump 5 and the on electromagnetic valve 4; when the electromagnetic valve 4 is cut off, the gas inlet is closed, the gas outlet is connected to the gas discharging opening, thus the gas running through the gas connecting pipe 41 of the electromagnetic valve 4 and the gas chamber, the gas outlet of the electromagnetic valve 4 and then discharging out of the gas discharging opening, So that the pneumatic drain valve stops discharge water out. People can set inductive time or the inductive distance of the inductor to switch the pneumatic drain valve to work in double-drainage, for example, if the duration of the inductive signal of the inductor is short or the inductive distance is short, the controller 3 starts one of the electromagnetic valves, thus making the pneumatic drain valve working in small volume, if the duration of the inductive signal of the inductor is long or the inductive distance is long, the controller starts the other electromagnetic valve, thus making the pneumatic drain valve working in large volume.

A pneumatic inductive control device of a pneumatic drain valve of the present invention is available in a single-drainage pneumatic drain valve (that is to say, no matter the pneumatic drain valve has only one gas chamber or more than one, the pneumatic drain valve has an gas chamber to control the drainage ), so that it can only apply with one electromagnetic valve in the present invention.

With above structure, the present invention of a pneumatic inductive control device of a pneumatic drain valve can be assembled near the water tank of the drain valve or far away from the water tank, the position is not limited, the user can assemble in any position as needed.

### The second embodiment:

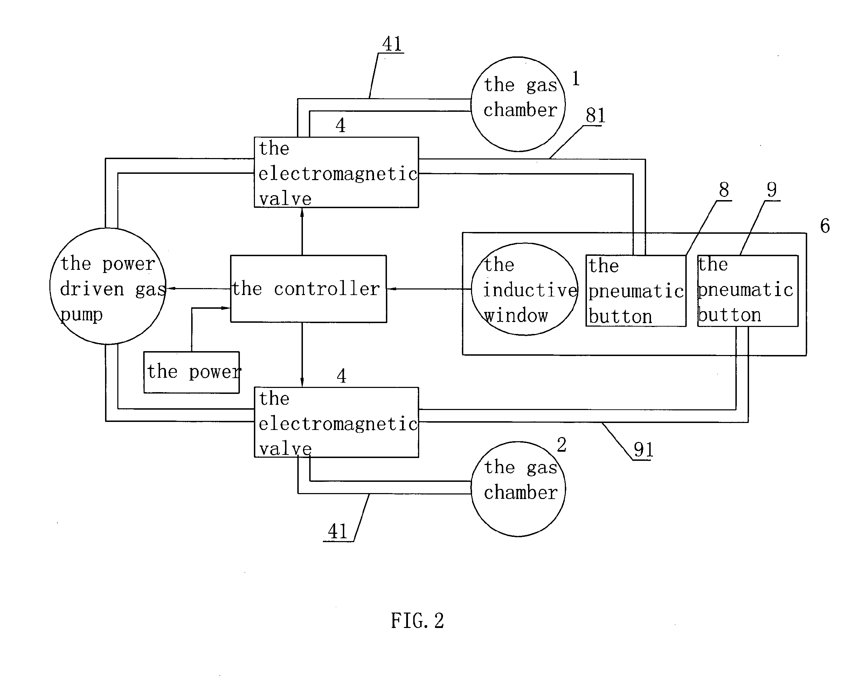

As figured in fig.2, the difference of this embodiment of a pneumatic inductive control device of a pneumatic drain valve from the first embodiment is that; it further comprises two pneumatic buttons 8 and 9, (they can apply with existing pneumatic buttons), the gas outlets of the two pneumatic buttons 8 and 9 are respectively connected to the gas discharging openings of the two electromagnetic valves 4 by gas connecting pipes 81 and 91; the two pneumatic buttons 8 and 9 and the inductor are assembled in the same panel 6.

With above two pneumatic buttons 8 and 9, a pneumatic inductive control device of a pneumatic drain valve of the present invention has not only the inductive control function, but also has manual control function. In inductive control mode, when the electromagnetic valve 4 is cut off, the gas inside the gas chamber 1/2 is discharged out through the gas connecting pipe 41, the gas outlet of and the gas discharging opening of the electromagnetic valves 4, the gas connecting pipes 81 or 91 between the pneumatic buttons 8 and 9 and the electromagnetic valves 4, and the pneumatic button 8 or 9. in manual control mode, (this time the two electromagnetic valves 4 are cut off, the gas inlets are closed), user only needs to press one of the two pneumatic buttons by hand to make the pneumatic button to generate gas, gas runs through the gas connecting pipe between the pneumatic button and the electromagnetic valve, the gas discharging opening and the gas outlet of corresponding electromagnetic valve, the gas connecting pipe between the electromagnetic valve and the gas chamber then to the corresponding gas chamber, thus driving the pneumatic drain valve to discharge water in large volume or small volume; when the hand leaves away the pneumatic button, the pneumatic button is repositioned, meanwhile the gas inside the corresponding gas chamber runs in an opposite path to the previous gas path to the pneumatic button, then runs out of the gas discharging opening of the pneumatic button, thus making the pneumatic drain valve stopping discharging water out.

A pneumatic inductive control device of a pneumatic drain valve of the present invention is available in a single-drainage pneumatic drain valve (that is to say, whether the pneumatic drain valve has one gas chamber or one more, the pneumatic drain valve has only one gas chamber to control to discharge water), so that the pneumatic inductive control device can have just one electromagnetic valve and one pneumatic button.

A pneumatic inductive control device of a pneumatic drain valve of this embodiment, compared to the first embodiment, is added with a manual control mode, it is convenient for the user to choose corresponding control mode according as his own habit. We add that, with the manual operated control method, the present invention can be assembled near the water tank of the drain valve or far away from the water tank, so that the assembly position is not limited, user can assemble it anywhere as needed.

### The third embodiment:

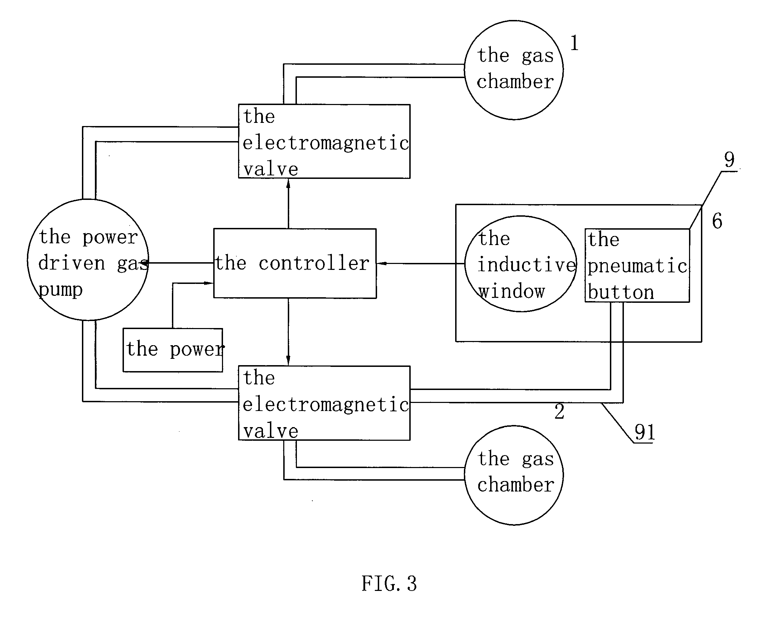

Please refer to fig.3, the difference of the pneumatic inductive control device of a pneumatic drain valve of this embodiment from the second embodiment is that: it is just disposed with one pneumatic button 9, the gas outlet of the pneumatic button 9 is connected to the gas discharging opening of the one of the electromagnetic valves 4 by gas connecting pipe 91; the pneumatic button 9 and the inductor are assembled in the same panel 6.

In the third embodiment, the two gas chambers 1, 2 of the pneumatic drain valve are respectively disposed with inductive control method, moreover, the gas chamber 2 can be further applied with manual control method.

### The fourth embodiment:

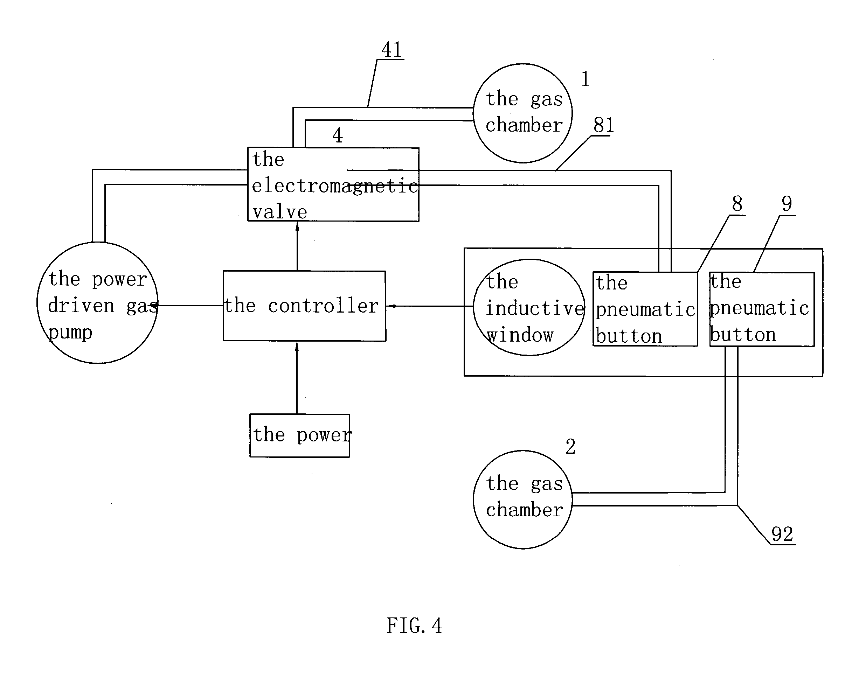

Please refer to fig.4, the difference of the pneumatic inductive control device of a pneumatic drain valve of this embodiment from the second embodiment is that: it is just disposed with one electromagnetic valve 4, the gas outlet of the electromagnetic valve 4 is connected to the gas inlet of the gas chamber 1 by gas connecting pipe 41; the gas outlet of the pneumatic button 8 is connected to the gas discharging opening of the electromagnetic valve 4 by gas connecting pipe 81, the gas outlet of the other pneumatic button 9 is connected to the gas inlet of the gas chamber 2 of the pneumatic drain valve.

In the fourth embodiment, the gas chamber of the pneumatic drain valve can be applied with inductive control method of manual control method, the other one gas chamber, the gas chamber 2, is just applied with manual control method.

### The fifth embodiment:

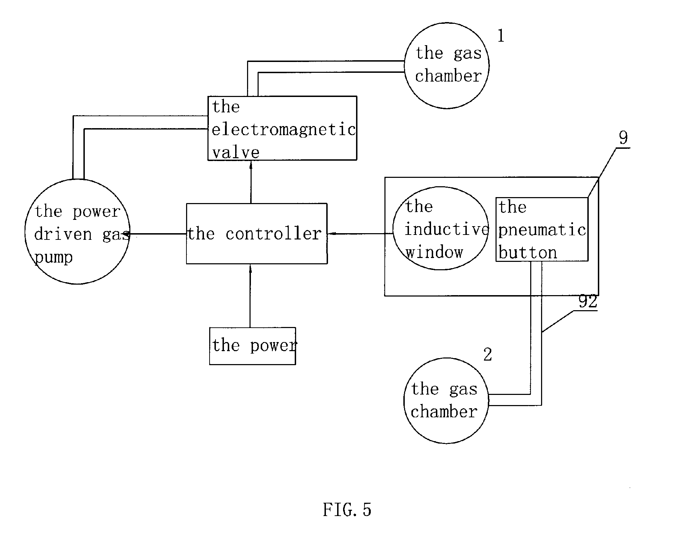

Please refer to fig.5, the difference of the pneumatic inductive control device of a pneumatic drain valve of this embodiment from the fourth embodiment is that: it is just disposed with one pneumatic button 9, the gas outlet of the pneumatic button 9 is connected to the gas inlet of the other gas chamber, the gas chamber 2, by gas connecting pipe 92.

In the fifth embodiment, the gas chamber 1 of the pneumatic drain valve is applied with inductive control method, the gas chamber 2 of the pneumatic drain valve is applied with manual operated control method.

The invention may be summarized as follows: The present invention is provided with a pneumatic inductive control device of a pneumatic drain valve, which comprising an inductor, a controller, a power driven gas pump, gas connecting pipes and at least one electromagnetic valve; the output of the inductor is connected to the input of the controller, the outputs of the controller are respectively connected to the input terminal of the electromagnetic valve and the input terminal of the power driven gas pump; the gas outlet of the power driven gas pump is connected to the gas inlet of the electromagnetic valve by gas connecting pipe; the gas inlet of at least one gas chamber of the pneumatic drain valve is connected to the gas outlet of the electromagnetic valve by gas connecting pipe. The present invention adds an inductive control mode to the pneumatic drain valve, and the assembly position is not limited, thus satisfying the users' assembly need.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A pneumatic inductive control device of a pneumatic drain valve, wherein comprising an inductor, a controller, a power driven gas pump, gas connecting pipes and at least one electromagnetic valve; the output of the inductor is connected to the input of the controller, the outputs of the controller are respectively connected to the input terminal of the electromagnetic valve and the input terminal of the power driven gas pump; the gas outlet of the power driven gas pump is connected to the gas inlet of the electromagnetic valve by gas connecting pipe; the gas inlet of at least one gas chamber of the pneumatic drain valve is connected to the gas outlet of the electromagnetic valve by gas connecting pipe.

2. A pneumatic inductive control device of a pneumatic drain valve according to claim 1, wherein further comprising at least one pneumatic button, the gas outlet of the pneumatic button is connected to the gas discharging opening of the electromagnetic valve by gas connecting pipe.

3. A pneumatic inductive control device of a pneumatic drain valve according to claim 1, wherein comprising one electromagnetic valve; a pneumatic button is further disposed; the pneumatic drain valve has two gas chambers, the gas inlet of one gas chamber is connected to the gas outlet of the electromagnetic valve by gas connecting pipe, the gas inlet of the other gas chamber is connected to the gas outlet of the pneumatic button by gas connecting pipe.

4. A pneumatic inductive control device of a pneumatic drain valve according to claim 1, wherein comprising two electromagnetic valves, the outputs of the controller are respectively connected to the input terminals of the two electromagnetic valves, the gas outlets of the power driven gas pump are respectively connected to the gas inlets of the two electromagnetic valves by gas connecting pipes; the pneumatic drain valve has two gas chambers, the gas inlets of the two gas chambers are respectively connected to the outlets of the two electromagnetic valves by gas connecting pipes.

5. A pneumatic inductive control device of a pneumatic drain valve according to claim 1, wherein comprising one electromagnetic valve, the output of the controller is connected to the input terminal of the electromagnetic valve, the gas outlet of the power driven gas pump is connected to the gas inlet of the electromagnetic valve by gas connecting pipe; the pneumatic drain valve has at least one gas chamber, the gas inlet of at least one gas chamber is connected to the gas outlet of the electromagnetic valve by gas connecting pipe.

6. A pneumatic inductive control device of a pneumatic drain valve according to claim 2, wherein comprising two electromagnetic valves and two pneumatic buttons, the outputs of the controller are respectively connected to the input terminals of the two electromagnetic valves, the gas outlets of the power driven gas pump are respectively connected to the gas inlets of the two electromagnetic valves by gas connecting pipes; the pneumatic drain valve has two gas chambers, the gas inlets of the two gas chambers are respectively connected to the gas outlets of the two electromagnetic valves by gas connecting pipes, the gas outlets of the two pneumatic buttons are respectively connected to the gas discharging openings of the two electromagnetic valves by gas connecting pipes.

7. A pneumatic inductive control device of a pneumatic drain valve according to claim 2, wherein comprising one electromagnetic valve and one pneumatic button, the output of the controller is connected to the input terminal of the electromagnetic valve, the gas outlet of the power driven gas pump is connected to the gas inlet of the electromagnetic valve by gas connecting pipe; the pneumatic drain valve has at least one gas chamber, the gas inlet of one gas chamber is connected to the gas outlet of the electromagnetic valve by gas connecting pipe, the gas outlet of the pneumatic button is connected to the gas discharging opening of the electromagnetic valve by gas connecting pipe.

8. A pneumatic inductive control device of a pneumatic drain valve according to claim 2, wherein comprising two electromagnetic valves and one pneumatic button, the outputs of the controller are respectively connected to the input terminals of the two electromagnetic valves, the gas outlets of the power driven gas pump are respectively connected to the gas inlets of the two electromagnetic valves; the pneumatic drain valve has two gas chambers, the gas inlets of the two gas chambers are respectively connected to the gas outlets of the two electromagnetic valves by gas connecting pipes, the gas outlet of the pneumatic button is connected to the gas discharging opening of one of the two electromagnetic valves by gas connecting pipe.

9. A pneumatic inductive control device of a pneumatic drain valve according to claim 2, wherein comprising two pneumatic buttons and one electromagnetic valve, the output of the controller is connected to the input terminal of the electromagnetic valve, the gas outlet of the power driven gas pump is connected to the gas inlet of the electromagnetic valve by gas connecting pipe; the pneumatic drain valve has two gas chambers, the gas inlet of one gas chamber is connected to the gas outlet of the electromagnetic valve by gas connecting pipe, the gas inlet of the other gas chamber is connected to the gas outlet of one of the pneumatic buttons by gas connecting pipe, the gas outlet of the other pneumatic button is connected to the gas discharging opening of the electromagnetic valve by gas connecting pipe.

10. A pneumatic inductive control device of a pneumatic drain valve according to claim 1, claim 4 or claim 5, wherein the inductor is assembled in a panel, the panel is disposed with an inductive window to cooperate with the inductor.

11. A pneumatic inductive control device of a pneumatic drain valve according to claim 2, claim 3, claim 6, claim 7, claim 8 or claim 9, wherein the inductor and the pneumatic button are assembled in the same panel, the panel is disposed with an inductive window to cooperate with the inductor.
